# EUROPÄISCHE PATENTSCHRIFT

(11) **EP 2 833 161 B1**
(45) Veröffentlichungstag und Bekanntmachung des Hinweises auf die Patenterteilung: **22.11.2017**
(21) Anmeldenummer: 14179285.3
(22) Anmeldetag: 31.07.2014
(51) Int. Cl.: G01S 17/42, G01S 17/93, G01S 17/48, G01S 7/481

(54) **Optoelektronische Messvorrichtung für ein Kraftfahrzeug und Scansensor hierfür**
Optoelectronic measuring device for a motor vehicle and scan sensor for the same
Dispositif de mesure optoélectronique pour un véhicule automobile et capteur à balayage associé

(30) Priorität: 31.07.2013 DE 102013012787
(43) Veröffentlichungstag der Anmeldung: 04.02.2015
(73) Patentinhaber: Valeo Schalter und Sensoren GmbH, 74321 Bietigheim-Bissingen (DE)
(72) Erfinder: Kiehn, Michael, 21039 Hamburg (DE); Dr. Lages, Ulrich, 22143 Hamburg (DE)

(56) Entgegenhaltungen:
- EP-A1- 1 890 168
- WO-A1-2012/165957
- DE-A1- 3 609 834

## Beschreibung

Die Erfindung betrifft eine optoelektronische Messvorrichtung für ein Kraftfahrzeug, mit wenigstens einer abtastenden optoelektronischen Detektionseinrichtung, nämlich einem Laserscanner, gemäß dem Oberbegriff des Anspruchs 1. Die Erfindung betrifft außerdem einen Scansensor für derartige Messvorrichtungen.

Optoelektronische Sensoren ermöglichen im weitesten Sinne die Umwandlung von elektronisch erzeugten Daten und Energien in Lichtemissionen und umgekehrt. Sie arbeiten nach dem Prinzip, mittels eines optischen Senders, beispielsweise eines Lasers, einen Lichtstrahl auszusenden und mittels eines optischen Empfängers zu registrieren.

DE 20 2010 001 194 U1 offenbart einen optoelektronischen Sensor, der eine Empfängerschaltung mit einem Lichtempfangselement und einen Schaltregler zur Versorgung der Empfängerschaltung mit einer Betriebsspannung aufweist. Der bekannte optoelektronische Sensor umfasst ferner eine Auswertungseinheit zur Verarbeitung des elektronischen Empfangssignals der Empfangsschaltung.

In der Patentanmeldung WO 2012/165957 A1 ist ein Fahrzeug mit einem System zum Übertragen von optischen Signalen beschrieben. Dieses System kann zur Abstandsmessung beispielsweise für einen Parkassistenten verwendet werden.

In der Patentanmeldung DE 36 09 834 A1 ist ein Verfahren und eine Einrichtung zum Stören eines Laser-Entfernungsmessers beschrieben.

Die Patentanmeldung EP 1 890 168 A1 zeigt einen Laserscanner mit einem Rotor und einem Drehkörper, die um unterschiedliche Drehachsen drehbar gelagert sind.

Im Automobilbereich werden zunehmend unterschiedlichste Fahrassistenzsysteme eingesetzt, das heißt elektronische Zusatzeinrichtungen zur Unterstützung des Fahrers in bestimmten Fahrsituationen. Es sind laser-basierte Messvorrichtungen für Kraftfahrzeuge unter der Bezeichnung "Lidar" ("Light detection and ranging") bekannt, welche insbesondere der optischen Abstands- und Geschwindigkeitsmessung dienen und die Erkennung von Objekten in einer relativ großen Reichweite bis 200 m vom Kraftfahrzeug ermöglichen. Die optoelektronischen Detektionseinrichtungen derartiger optischer Messvorrichtungen sind üblicherweise als Laserscanner ausgebildet, wobei die ausgesendeten Laserstrahlen mittels einer drehbaren Spiegeleinheit auf die zu vermessende Szene umgelenkt wird und den Überwachungsbereich des Laserscanners periodisch überstreicht. Der Laserscanner wird beispielsweise im vorderen Bereich des Fahrzeugs platziert, wie etwa hinter der Windschutzscheibe, oder am Kühlergrill, um unter anderem die Zeit bis zum Aufprall (TTC = "Time to collision") zu ermitteln. Scannende Detektionseinrichtungen können aber auch im seitlichen Bereich des Fahrzeugs platziert werden, um insbesondere den Totwinkel des Kraftfahrzeugs zu überwachen.

Laserscanner arbeiten nach dem Lichtlaufzeitprinzip, wobei elektromagnetische Strahlen (Laserpulse) ausgesendet werden und das von einem Zielobjekt in der Umgebung des Kraftfahrzeugs reflektierte Licht detektiert wird. Bekannte Laserscanner weisen eine Sende- und Empfangseinheit auf, welche einen optischen Sender zum Aussenden elektromagnetischer Strahlen und einen optischen Empfänger zum Empfangen von reflektierten Strahlen und zum Bereitstellen eines von den empfangenen Strahlen abhängigen, elektrischen Empfangssignals aufweist. Dabei werden die ausgesendeten elektromagnetischen Strahlen über einen schwenkbaren Spiegel so abgelenkt, dass eine Abtastung des gesamten Sichtfeldes innerhalb eines bestimmten Abtastwinkelbereichs stattfindet. Pro Abtastwinkel wird dabei ein Laserimpuls ausgesendet. Im selben Winkelschritt werden die reflektierten Strahlen mittels des optischen Empfängers empfangen und ein entsprechendes elektrisches Empfangssignal bereitgestellt. Werden Echos, bzw. Pulse, im Empfangssignal erkannt, so sind diese grundsätzlich auf Reflektionen der ausgesendeten Strahlen an Zielobjekten in der Umgebung zurückzuführen. Die Laufzeit zwischen dem Aussenden und dem Empfangen des Echos ist proportional zur Distanz zum Objekt. Aus der Laufzeitmessung wird die Entfernung für den Winkelschritt ermittelt.

Einen derartigen Laserscanner für optische Messvorrichtungen für Kraftfahrzeuge offenbart DE 10 2010 047 984 A1. In einem Gehäuse des bekannten Laserscanners sind ein Sendefenster, durch das gepulstes Laserlicht abgestrahlt wird, und ein Empfangsfenster eingebracht, durch das von Objekten in einem Überwachungsbereich reflektiertes Laserlicht empfangen wird.

Innerhalb des Gehäuses der bekannten optoelektronischen Detektionseinrichtung ist eine Sende- und Empfangskombination angeordnet, welche optische Elemente, nämlich eine Sendeoptik und eine Empfangsoptik, und elektronische Elemente umfasst, nämlich einen gepulsten Laser als Strahlenquelle und einen Detektor zur Bereitstellung eines elektrischen Empfangssignals in Abhängigkeit von empfangenen Strahlen. Der Laser und die Sendeoptik bilden dabei die Sendereinheit und sind auf einer Senderplatine angeordnet. Eine Empfängereinheit umfasst den Detektor als optischen Empfänger und die Empfangsoptik, welche auf einer Empfängerplatine angeordnet sind.

Die elektronischen Elemente des Laserscanners sind an eine Steuer- und Auswertungseinheit angeschlossen, welche einerseits den Laserpuls steuert und andererseits das aus dem empfangenen Strahlen vom Detektor gebildete Empfangssignal auswertet. Das Gehäuse des bekannten Laserscanners ist entsprechend groß auszugestalten, um sämtliche benötigten Elemente der optoelektronischen Detektionseinrichtung aufzunehmen. Der bekannte Laserscanner wird an der Fahrzeugkontur eines Fahrzeugs angebracht, wobei durch den benötigten Bauraum des Laserscanners die Gestaltungsfreiheit des Entwerfers für das Fahrzeugdesign, das heißt das äußere Erscheinungsbild der Fahrzeugkarosserie, stark beschränkt wird. Der bekannte Laserscanner wird daher häufig aus Designgründen abgelehnt.

Der vorliegenden Erfindung liegt die Aufgabe zugrunde, eine optische Messvorrichtung für ein Kraftfahrzeug mit wenigstens einer abtastenden optoelektronischen Detektionseinrichtung bereitzustellen, welche möglichst wenig Raum zur Montage im Bereich der Fahrzeugkontur eines Kraftfahrzeugs benötigt.

Diese Aufgabe wird erfindungsgemäß durch eine optische Messvorrichtung mit den Merkmalen des Anspruchs 1 gelöst.
Erfindungsgemäß sind die optischen Elemente einer oder mehrerer Sende- und Empfangskombinationen in einem von den elektronischen Elementen der jeweiligen optoelektronischen Detektionseinrichtung baulich getrennten Scansensor angeordnet. Dabei sind die optischen Elementen mit dem jeweils zugeordneten elektronischen Elementen über optische Leiter verbunden. Der erfindungsgemäße Scansensor weist demnach mindestens eine Empfangsoptik und eine Sendeoptik auf, sowie optische Anschlusselemente, an welche die optischen Leiter zur Verbindung mit den jeweiligen elektronischen Elementen anschließbar sind. Aufgrund der räumlichen Trennung der optischen Elemente der Detektionseinrichtung von den elektronischen Elementen ist der erforderliche Bauraum für den Scansensor erheblich gegenüber herkömmlichen Laserscannern reduziert, welche sowohl optische als auch elektronische Komponenten sowie die erforderliche Elektronik in ihren Gehäusen aufnehmen. Die Zuordnung von Strahlenquelle und Detektor als Quelle und Senke im Sinn des Strahlentranfers in der optoelektronischen Detektionseinrichtung ist durch die optisch leitende Verbindung bei räumlicher Trennung der Elektronik von der Optik gegeben. An der Fahrzeugkontur eines Kraftfahrzeugs werden nach der Erfindung lediglich die baulich kleinen Scansensoren angeordnet, während die elektronischen Elemente, welche mit den optischen Elementen des Scansensors zusammenwirken, an einem beliebigen geeigneten Ort angeordnet werden können.

Die erfindungsgemäße bauliche Trennung von optischen Elementen und elektronischen Elementen einer Detektionseinrichtung ist besonders vorteilhaft bei optischen Messvorrichtungen mit mehreren optoelektronischen Detektionseinrichtungen, insbesondere Laserscannern, oder/und mehreren Sende- und Empfangskombinationen pro Laserscanner. Durch die signalübertragende Verbindung der optischen Elemente mit den jeweils zugeordneten elektronischen Elementen über optische Leiter besteht die Möglichkeit, mehrere Empfangsoptiken und/oder Sendeoptiken mit den gleichen elektronischen Elementen zu verknüpfen, so dass die Elektronik der optischen Messvorrichtung insgesamt deutlich reduziert werden kann.

In einer vorteilhaften Ausführungsform der Erfindung umfasst der Scansensor eine Spiegeleinheit mit einem um eine Rotationsachse drehend antreibbaren Spiegelträger mit mindestens einem der Sendeoptik zugeordneten Sendespiegel zur Umlenkung der ausgesendeten Strahlen und mindestens einem der Empfangsoptik zugeordneten Empfangsspiegel. Dabei sind zwei Sende- und Empfangskombinationen pro Scansensor vorgesehen, welche derselben Spiegeleinheit zugeordnet sind. Dadurch kann mit geringem baulichem Aufwand ein gegenüber herkömmlichen Laserscannern erheblich erweitertes Sichtfeld ("HFOV = horizontal field of view") von 180° und mehr gescannt werden, wobei die optischen Achsen der beiden Sende- und Empfangskombinationen vorzugsweise in einem stumpfen Winkel von 100° bis 150° zueinander stehen, so dass auch in den Randbereichen des Sichtfelds nur eine Teilabschattung der jeweiligen Empfangsoptiken eintreten kann und zuverlässige Detektionsergebnisse erzielt werden können. Obwohl mehrere Sende- und Empfangskombinationen pro Scansensor vorgesehen sind und damit eine hohe Leistungsfähigkeit mit großwinkeligen Sichtfeldern erreicht wird, kann durch die erfindungsgemäße Verbindung der Scansensoren mit den elektronischen Elementen über optische Leiter eine Messvorrichtung bereitgestellt werden, deren Bauteile im Bereich der Fahrzeugkontur baulich sehr klein sind.

In einer vorteilhaften Ausführungsform der Erfindung bilden die elektronischen Elemente einer oder mehrerer Sende- und Empfangskombinationen einer erfindungsgemäßen optoelektronischen Detektionseinrichtung eine gemeinsame Baugruppe mit der Steuer- und Auswertungseinheit. Diese gemeinsame Baugruppe wird an einem geeigneten Ort in einem Kraftfahrzeug angeordnet und kann beispielsweise dem zentralen Rechner einer Bordelektronik zugeordnet sein. Dabei werden die optischen Elemente, welche in dem erfindungsgemäß baulich getrennten Scansensor angeordnet sind, über optische Leiter mit den elektronischen Elementen verbunden, beispielsweise über leicht zu montierende Steckverbindungen. Die optischen Leiter sind vorzugsweise Lichtwellenleiterkabel, insbesondere Glasfaserkabel. Umfasst die optische Messvorrichtung mehrere Detektionseinrichtungen und/oder sind mehrere Sende- und Empfangskombinationen im Scansensor vorgesehen, so können die mehreren Sendeoptiken und/oder mehreren Empfangsoptiken über optische Leiter in Sterntopologie mit der zentralen Baugruppe verbunden werden, welche die jeweils zugeordneten elektronischen Elemente (Strahlenquellen und Detektoren) umfasst.

Eine Verringerung des baulichen Aufwands für Messvorrichtungen mit mehreren Detektionseinrichtungen und/oder mehreren Sende- und Empfangskombinationen pro Detektionseinrichtung ist gegeben, wenn mehrere oder sämtliche Sendeoptiken über optische Leiter an die selben Strahlenquellen angeschlossen sind und/oder mehrere oder sämtliche Empfangsoptiken über optische Leiter an die selben Detektoren angeschlossen sind. Dabei sind in einer Ausführungsform der erfindungsgemäßen Messvorrichtung mit mehreren Detektionseinrichtungen und einer zentralen Steuer- und Auswertungseinheit pro Scansensor eine Strahlenquelle und ein Detektor vorgesehen, dem jeweils sämtliche Sendeoptiken und Empfangsoptiken der jeweiligen Detektionseinrichtung zugeordnet sind und über optische Leiter angeschlossen sind. Auf diese Weise wird die Anzahl der Strahlungsquellen bzw. Detektoren (Senken) reduziert und dadurch auch die Baugröße der Scansensoren minimiert. Eine Kopplung mehrerer optischer Leiter mit einer gemeinsamen Strahlenquelle wird vorteilhaft durch eine optische Weiche realisiert, welche leicht im Scansensor bzw. innerhalb dessen Gehäuses angeordnet werden kann.

Vorteilhaft ist, bei einer Kopplung mehrerer Sendeoptiken an eine gemeinsame Strahlenquelle, und/oder Kopplung mehrerer Empfangsoptiken an gemeinsame Detektoren, den entsprechenden Sende- und Empfangskombinationen ein optischer Schalter zugeordnet. Dadurch kann der Reduzierung der Messreichweite der Detektionseinrichtung durch die Halbierung des Strahlenflusses bei Kopplung mehrerer Sendeoptiken an eine Strahlenquelle entgegengewirkt werden, bzw. das Signal-RauschVerhältnis bei Kopplung mehrerer Empfangsoptiken an einen Detektor verbessert werden. Der optische Schalter ist, in einer Ausführungsform der Erfindung, in der Baugruppe der Steuer- und Auswertungseinheit platziert, wodurch die Sendeoptiken und Empfangsoptiken in Sterntopologie angeschlossen werden können.

In einer vorteilhaften Ausführungsform der Erfindung sind die optischen Leiter mehrerer Empfangsoptiken wenigstens abschnittsweise durch ein gemeinsames Lichtwellenleiterkabel gebildet. In einer weiteren vorteilhaften Ausführungsform sind die optischen Leiter mehrerer Sendeoptiken wenigstens Abschnittsweise durch ein gemeinsames Lichtwellenleiterkabel gebildet. Bevorzugt sind die optischen Leiter mehrerer Empfangsoptiken und die optischen Leiter mehrerer Sendeoptiken einer Detektionseinrichtung jeweils durch gemeinsame Lichtwellenleiterkabel gebildet, so dass mit wenigen Lichtwellenleiterkabeln eine Verbindung sämtlicher optischen Elemente der Sende- und Empfangskombinationen mit den jeweils zugeordneten elektronischen Elementen gewährleistet ist. Die optischen Elemente der Scansensoren sind dabei in Bustopologie mit der Steuer- und Auswertungseinheit optisch verbunden. Bei einer Bündelung der optischen Leiter mehrerer Empfangsoptiken und/oder Sendeoptiken in jeweils gemeinsamen Lichtwellenleiterkabeln werden die optischen Schalter pro Sende- und Empfangskombination vorteilhaft im Gehäuse des Scansensors angeordnet.

Bei einer Bündelung der optischen Leiter für Sendeoptiken und Empfangsoptiken in einem gemeinsamen Lichtwellenleiterkabel wird eine Blendung des Empfängers durch die direkte Kopplung mit dem jeweiligen Sender für die Dauer eines Laserpulses vermieden, in dem das gemeinsame Lichtwellenleiterkabel über optische Richtkoppler angeschlossen wird. Ist dabei an beiden Enden des gemeinsamen Lichtwellenleiterkabels ein optischer Richtkoppler angeordnet, so ist eine Vollduplex-Übertragung mit dem gemeinsamen Lichtwellenleiterkabel gegeben. Eine Blendung des Detektors durch die ausgesendeten Strahlen der jeweiligen Sende- und Empfangskombinationen ist dadurch sicher ausgeschlossen.

In einer weiteren vorteilhaften Ausführungsform der Erfindung ist jedem gemeinsamen Lichtwellenleiterkabel für die Strahlenquellen und dem jeweils zugeordneten Detektoren ein Richtkoppler ausschließlich auf der Seite der elektronischen Elemente vorgesehen, so dass der bauliche Aufwand für den Scansensor reduziert ist.

In einer besonders vorteilhaften Ausführungsform der Erfindung ist die Länge jedes gemeinsamen Lichtwellenleiterkabels von Sendeoptiken und Empfangsoptiken derart mit dem Sendepuls der zugeordneten Strahlenquelle abgestimmt, dass die Lichtlaufzeit im Lichtwellenleiterkabel größer ist, als die Pulsbreite des Sendepulses. Eine gegebenenfalls auftretende Blendung der Empfangsseite durch den optischen Sender ist aufgrund der hinreichenden Länge des Lichtwellenleiterkabels bereits abgeklungen, bevor die ersten Reflektionen von Objekten außerhalb des Scansensors beim Detektor eintreffen.

Ausführungsbeispiele der Erfindung sind nachstehend näher erläutert. Es zeigen:
- Fig. 1: eine Draufsicht auf ein Kraftfahrzeug mit einer optischen Messvorrichtung mit mehreren Laserscannern,
- Fig. 2: ein Schaltbild eines ersten Ausführungsbeispiels einer optischen Messvorrichtung für Kraftfahrzeuge,
- Fig. 3: ein zweites Ausführungsbeispiel einer optischen Messvorrichtung für Kraftfahrzeuge,
- Fig. 4: ein drittes Ausführungsbeispiel einer optischen Messvorrichtung für Kraftfahrzeuge,
- Fig. 5: eine schematische Darstellung eines Ausführungsbeispiels der Signalübertragung über optische Leiter,
- Fig. 6: eine schematisierte Darstellung eines zweiten Ausführungsbeispiels der Signalübertragung über optische Leiter.

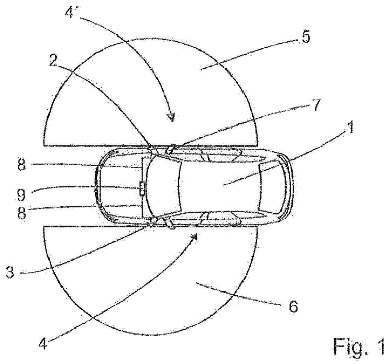

Fig. 1 zeigt eine Draufsicht eines Kraftfahrzeugs 1 mit einer optischen Messvorrichtung zur Erkennung von Zielobjekten im Umfeld des Kraftfahrzeugs 1. Die optische Messvorrichtung umfasst zwei optoelektronische Detektionseinrichtungen, nämlich Laserscanner, deren nachstehend noch näher erläuterte Scansensoren 2, 3, an den Seiten 4, 4' des Kraftfahrzeugs 1 angeordnet sind. Jeder Scansensor 2, 3 erfasst demnach jeweils ein seitliches Sichtfeld 5, 6 des Kraftfahrzeugs 1. Die Scansensoren 2, 3 sind in die Kontur der Fahrzeugkarosserie eingebettet und weisen ein lichtdurchlässiges Fenster auf, durch das Laserstrahlen zum Scannen des Sichtfelds 5, 6 auf die zu erfassende Szene ausgesendet werden und an Zielobjekten reflektierte Strahlen in das Gehäuse des Scansensors 2, 3 eindringen können. Alternativ zur Anordnung der Scansensoren 2, 3 an der Kontur der Fahrzeugkarosserie können die Scansensoren 2, 3 an den Außenspiegeln 7 des Kraftfahrzeugs 1 angeordnet sein.

Die Scansensoren 2, 3 sind jeweils Bestandteil von Laserscannern, das heißt von abtastenden optoelektronischen Detektionseinrichtungen, und umfassen die optischen Elemente der optoelektronischen Detektionseinrichtungen. Die den optischen Elementen zugeordneten elektronischen Elemente sind abseits der Scansensoren 2, 3 angeordnet, wobei die elektronischen Elemente mit den optischen Elementen der Laserscanner über optische Leiter 8 signalübertragend verbunden sind. Auf diese Weise sind die optischen Elemente in einem baulich getrennten Scansensor 2, 3 angeordnet, welcher mit einem geringen Platzbedarf an dem Kraftfahrzeug 1 angeordnet werden kann und insbesondere in die Fahrzeugkontur integrierbar ist. Die elektronischen Elemente der optoelektronischen Detektionseinrichtungen sind außerhalb der Scansensoren 2, 3 angeordnet und bilden eine gemeinsame Baugruppe mit einer Steuer- und Auswertungseinheit 9 der optischen Messvorrichtung des Kraftfahrzeugs 1.

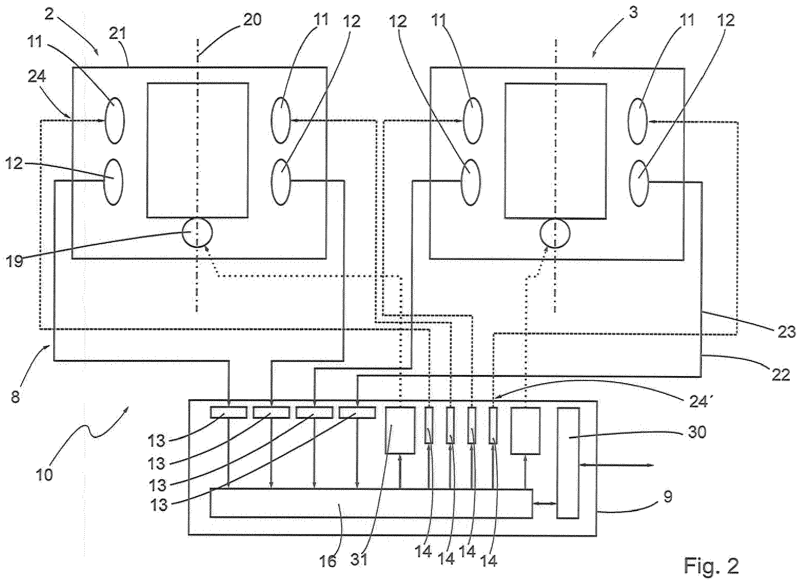

Fig. 2 zeigt ein erstes Ausführungsbeispiel einer optischen Messvorrichtung 10 mit zwei Scansensoren 2, 3 und einer Steuer- und Auswertungseinheit 9. In den Scansensoren 2, 3 sind jeweils die optischen Elemente von Sende- und Empfangskombinationen angeordnet, nämlich Sendeoptiken 11 für auszusendende elektromagnetische Strahlen und Empfangsoptiken 12 zum Empfangen von an einem Zielobjekt in der Umgebung der Scansensoren 2, 3 reflektierten Strahlen. Die elektronischen Elemente der Laserscanner sind insbesondere die den Sendeoptiken 11 zugeordneten Strahlenquellen 13, nämlich gepulste Laser, zum Aussenden der Strahlen, sowie die den Empfangsoptiken 12 zugeordneten Detektoren 14. Die Detektoren 14 stellen ein elektrisches Empfangssignal 15 bereit, welches dem Rechenmodul 16 der Steuer- und Auswertungseinheit 9, beispielsweise einem integrierten Schaltkreis, vorgegeben ist. Das Empfangssignal 15 wird dabei gegebenenfalls durch eine Verstärkungsschaltung, beispielsweise einem Transimpedanzverstärker, aufbereitet.

Das Rechenmodul 16 steuert mit entsprechenden Pulssignalen 17 die Strahlenquelle 13. Die von den Strahlenquellen 13 erzeugten Strahlen werden von den Sendeoptiken 11 auf die zu vermessende Szene abgegeben. Die an Zielobjekten in der Umgebung der Scansensoren 2, 3 reflektierten Strahlen werden von den Empfangsoptiken 2 zu den Detektoren 14 geleitet. Jedem Scansensor 2, 3 ist eine rotierend antreibbare Spiegeleinheit 18 zugeordnet. Eine Antriebseinheit 19 wird von der Steuer- und Auswertungseinheit 9 angesteuert, welche hierfür Motorsteuermodule 31 umfasst. Die von den Strahlenquellen 13 ausgesendeten Strahlen werden über die jeweilige Spiegeleinheit 18 so abgelenkt, dass eine Abtastung des gesamten Sichtfelds 5, 6 (Fig. 1) innerhalb eines bestimmten Abtastwinkelbereichs stattfindet. Im selben Winkelschritt werden die reflektierten Strahlen von der Empfangsoptik 12 der jeweiligen Sende- und Empfangskombination empfangen und dem jeweiligen Detektor 14 zugeführt, um aus den reflektierten Strahlen ein entsprechendes elektrisches Empfangssignal 15 zu ermitteln. Die Laufzeit zwischen dem Aussenden und dem Empfangen eines Echos ist proportional zur Distanz zu einem Zielobjekt. Aus der Laufzeitmessung wird die Entfernung für den jeweiligen Winkelschritt ermittelt.

Im vorliegenden Ausführungsbeispiel weist jeder Scansensor 2, 3 jeweils zwei Sende- und Empfangskombinationen auf. Die Sendeoptik 11 und die Empfangsoptik 12 liegen dabei bezüglich ihrer jeweiligen optischen Achsen in Überdeckung zueinander. Die Spiegeleinheit 18 befindet sich demnach zwischen den Paaren von optischen Elementen jeder Sende- und Empfangskombination. Die optischen Achsen der Sendeoptiken 11 bzw. der Empfangsoptiken 12 liegen senkrecht zu der Drehachse 20 der jeweiligen Spiegeleinheit 18, wodurch in jeder möglichen Drehwinkelstellung der Spiegeleinheit ein von der Empfangsoptik 12 aufgenommener reflektierter Strahl eindeutig der Sendeoptik 11 derselben Sende- und Empfangskombination zugeordnet werden kann.

Durch das Zusammenfügen zweier Sende- und Empfangskombinationen in einem Scansensor kann das Sichtfeld des Laserscanners im Vergleich zu einem herkömmlichen Laserscanner mit einzelnen Sende- und Empfangseinheiten annähernd verdoppelt werden. Dabei ergibt sich ein großes Sichtfeld von 180° und mehr pro Scansensor 2, 3, ohne dass die Reichweite der Scansensoren 2, 3 in den Randbereichen zu stark einbricht, wenn die optischen Achsen der Paare von Sendeoptiken 11 und Empfangsoptiken 12 in einem Winkel von 100° bis 150° zu der optischen Achse der jeweils anderen Paarung von Sendeoptik 11 und Empfangsoptik 12 angeordnet sind. Es hat sich ein Winkel zwischen den optischen Achsen von 120° als besonders vorteilhaft erwiesen.

Die optischen Elemente, das heißt die Sendeoptiken 11 und die Empfangsoptiken 12 sind in dem Gehäuse 21 des jeweiligen Scansensors 2, 3 baulich von den elektronischen Elementen getrennt, mit denen sie gemeinsam optoelektronische Detektionseinrichtungen bilden. Die optischen Elemente sind jeweils über optische Leiter 8, nämlich Glasfaserkabel, mit den jeweils zugeordneten elektronischen Elementen verbunden. Im Ausführungsbeispiel gemäß Fig. 2 ist jede Sendeoptik 11 mittels jeweils eines separaten optischen Leiters 22 mit der jeweils zugeordneten Strahlenquelle 13 verbunden. Entsprechend ist jede Empfangsoptik 12 über einen separaten optischen Leiter 23 mit dem jeweils zugeordneten Detektor 14 signalübertragend verbunden. Alle optischen Leiter sind Glasfaserkabel. Alle optischen Leiter 22 zur Anbindung der Sendeoptiken 11 an die Sendeseite der Sende- und Auswertungseinheit 9 sind strichliert dargestellt. Die optischen Leiter 23 zur Anbindung der Empfangsoptiken 12 an die Empfängerseite der Sende- und Auswertungseinheit 9 sind als Volllinien dargestellt.

Zum Anschluss der optischen Leiter 22, 23 weisen die Scansensoren 2, 3 entsprechende Anschlusselemente 24 auf. Auch die Steuer -und Auswertungseinheit 9 umfasst entsprechende Anschlusselemente 24' für die in ihr angeordneten Detektoren 14 und Strahlenquelle 13, so dass bei der Installation der optischen Messvorrichtung 10 an einem Kraftfahrzeug die Glasfaserkabel zur Verbindung der Scansensoren 2, 3 mit der Steuer- und Auswertungseinheit 9 montiert werden können.

Die Gehäuse 21 der Scansensoren 2, 3 sind im Vergleich zu herkömmlichen Laserscannern erheblich kleiner, da der größte Teil der Elektronik, nämlich sämtliche elektronischen Elemente der Sende- und Empfangskombinationen, sowie auch weitere elektrische Elemente wie bspw. die Energieversorgung der Messvorrichtung 10, außerhalb der Scansensoren 2, 3 angeordnet wird. Darüber hinaus können mehrere Scansensoren 2, 3, nämlich wie im Ausführungsbeispiel zwei Scansensoren oder auch weitere Scansensoren an eine gemeinsame Steuer- und Auswertungseinheit 9 angeschlossen werden, welche an geeigneter Stelle im Kraftfahrzeug angeordnet wird. Dabei wird durch die Zusammenfassung der Elektronik der optischen Messvorrichtung 10 in einer zentralen Steuer- und Auswertungseinheit die Anzahl der elektronischen Elemente reduziert. In dem Ausführungsbeispiel gemäß Fig. 2 ist für jede Sendeoptik 11 eine separate Strahlenquelle 13 und für jede Empfangsoptik 12 ein separater Detektor 12 vorgesehen. Die Scansensoren 2, 3 werden mit ihren separaten optischen Leitern 22, 23 für die jeweiligen Sendeoptiken 11 und Empfangsoptiken 12 in Sterntopologie betrieben.

Über eine Transceivereinheit 30 kommuniziert die Steuer- und Auswertungseinheit 9 mit angeschlossenen Steuereinrichtungen von Fahrassistenzsystemen.

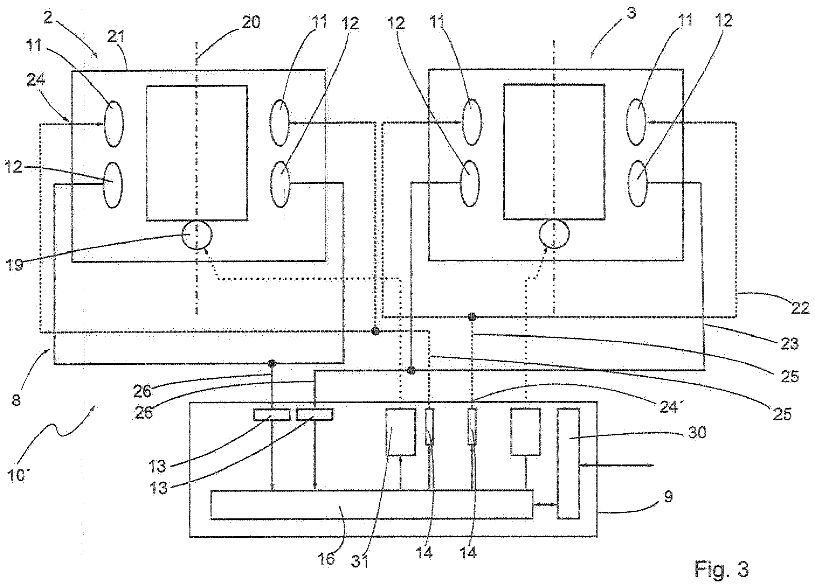

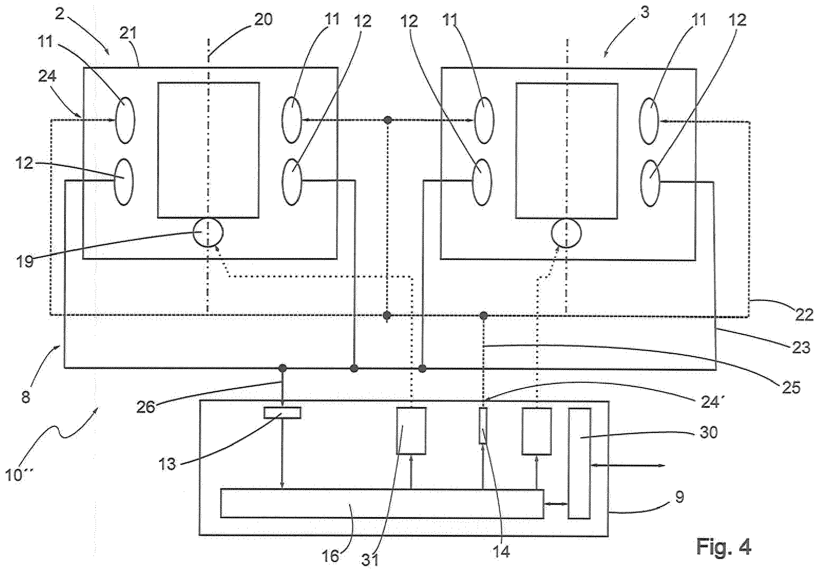

Fig. 4 zeigt ein zweites Ausführungsbeispiel einer optischen Messvorrichtung, welche bis auf die nachstehende Beschreibung mit dem Ausführungsbeispiel gemäß Fig. 2 übereinstimmt. Für jeweils gleiche Bauteile sind dabei die gleichen Bezugszeichen verwendet. Auch die optische Messvorrichtung 10' gemäß Fig. 3 weist zwei Scansensoren 2, 3 auf, welche baulich getrennt von einer gemeinsamen Steuer- und Auswertungseinheit 9 angeordnet sind und über optische Leiter 22, 23 mit der Steuer- und Auswertungseinheit 9 optisch signalübertragend verbunden sind.

Im Unterschied zum Ausführungsbeispiel gemäß Fig. 2, sind bei jedem Scansensor 2, 3 die optischen Leiter 22 beider Sendeoptiken 11 über ein gemeinsames Lichtwellenleiterkabel 25 mit einer gemeinsamen Strahlenquelle 13 gekoppelt, so dass die Anzahl der Strahlenquellen reduziert ist. Entsprechend sind die optischen Leiter 23 der Empfangsoptiken 12 jedes Scansensors 2, 3 über ein gemeinsames Lichtwellenleiterkabel 26 mit einem gemeinsamen Detektor 14 verbunden. Die mehreren Empfänger jedes Scansensors 2, 3 sind auf einen gemeinsamen Detektor 14 gekoppelt und die optischen Sender jedes Scansensors 2, 3 von einer gemeinsamen Strahlenquelle 13 gespeist. Jeder Scansensor 2, 3 weist daher ein Lichtwelienleiterkabel 25 zur Übertragung der ausgesendeten Laserstrahlen zu den Sendeoptiken 11 und ein Lichtwellenleiterkabel 26 zur Übertragung der von über die Empfangsoptiken 12 aufgenommenen reflektierten Strahlen zu dem jeweiligen Detektor 14 auf. Daher ist die Anzahl der Lichtwellenleiterkabel, das heißt der im Ausführungsbeispiel verwendeten Glasfaserkabel, welche zwischen dem Scansensor 2, 3 und der Steuer- und Auswertungseinheit 9 verlaufen, reduziert. Die Kopplung einer gemeinsamen Strahlenquelle 13 auf zwei Sendeoptiken 11 wird vorteilhaft durch eine optische Weiche oder einen Spleiß des gemeinsamen Lichtwellenleiterkabels im Gehäuse 21 des Scansensors 2, 3 gewährleistet.

Um einer Reduzierung der Messreichweite der Scansensoren 2, 3 entgegenzuwirken, welche aufgrund der Reduzierung des Strahlenflusses infolge der Kopplung einer gemeinsamen Strahlenquelle an mehrere Sendeoptiken beziehungsweise aufgrund eines im Vergleich zum Ausführungsbeispiel gemäß Fig. 2 schlechteren Signal-Rausch-Verhältnisses aufgrund der Kopplung mehrerer Empfangsoptiken 12 auf einen gemeinsamen Detektor 14 auftreten könnte, wird ein optischer Schalter pro Sende- und Empfangskombination verwendet. Der optische Schalter ist vorzugsweise in der Sende- und Auswertungseinheit 9 platziert, wobei separate Lichtwellenleiterkabel vom jeweiligen optischen Schalter zu den Sendeoptiken 11, beziehungsweise Empfangsoptiken 12 gezogen sind. Lediglich ein gemeinsames Lichtwellenleiterkabel zum Anschluss der Sendeoptiken 11, beziehungsweise der Empfangsoptiken 12 eines Scansensors 2, 3, an die Sende- und Auswertungseinheit 9 wird benötigt, wenn der optische Schalter in dem jeweiligen Scansensor 2, 3 angeordnet ist.

Fig. 4 zeigt ein weiteres Ausführungsbeispiel einer optischen Messvorrichtung 10" mit wiederum zwei Scansensoren 2, 3, welche an eine gemeinsame Steuer- und Auswertungseinheit 9 angeschlossen sind. Bis auf die nachfolgend beschriebenen Unterschiede entspricht der Aufbau der optischen Messvorrichtung 10" dem Aufbau der der optischen Messvorrichtung 10 gemäß Fig. 2.

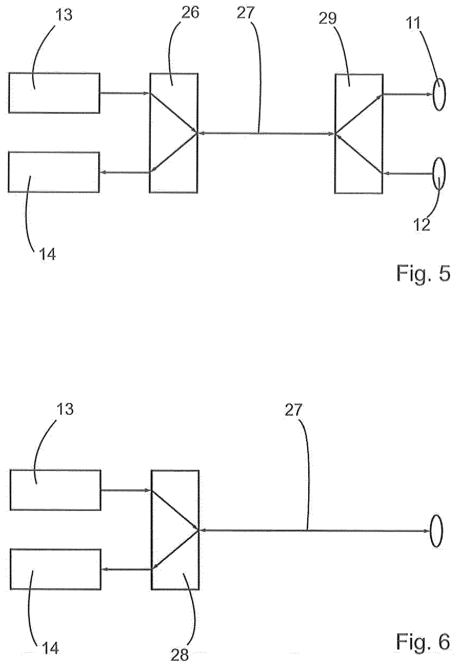

Bei der optischen Messvorrichtung 10" gemäß Fig. 5 sind sowohl die Sendeoptiken 11 des einen Scansensors 2 als auch die Sendeoptiken 11 des anderen Scansensors 3 an eine gemeinsame Strahlenquelle 13 angeschlossen. Entsprechend sind sämtliche Empfangsoptiken 12, das heißt die Empfangsoptiken 12 des einen Scansensors 2, als auch die Empfangsoptiken 12 des anderen Scansensors 3, auf einen gemeinsamen Detektor 14 für alle Sende- und Empfangskombinationen gekoppelt. Die optischen Leiter der Empfangsoptiken 11 sind dabei über ein gemeinsames Lichtwellenleiterkabel 27 an die einzelne Strahlenquelle 13 der Steuer- und Auswertungseinheit 9 angeschlossen. Entsprechend sind die optischen Leiter aller Empfangsoptiken 12 in einem gemeinsamen Lichtwellenleiterkabel 28 gebündelt und an einen einzelnen Detektor 14 in der Steuer- und Auswertungseinheit 9 angeschlossen.

Um der Reduzierung des Strahlenflusses zu einzelnen Sendeoptiken 11 und der Vervielfachung des Strahlenflusses aus Hintergrundlicht auf der Empfängerseite mit der Folge einer Verschlechterung des Signal-Rausch-Verhältnisses Rechnung zu tragen, sind jeder Sende- und Empfangskombination jeweils optische Schalter zugeordnet. Die optischen Schalter sind in der Steuer- und Auswertungseinheit 9 angeordnet.

In nicht dargestellten Ausführungsbeispielen sind Kombinationen von Scansensoren vorgesehen, bei denen einer oder mehrere Scansensoren mit separaten Lichtwellenleitern angeschlossen sind und einer oder mehrere Scansensoren über gemeinsame Lichtwellenleiterkabel mit der Steuer- und Auswertungseinheit verbunden sind.

Die Erfindung ist im Hinblick auf die Ausbildung der optischen Leiter einzelner Sendeoptiken und Empfangsoptiken in separaten Lichtwellenleitern, oder Kopplung in gemeinsame Lichtwellenleiterkabeln, nicht auf die beschriebenen Ausführungsbeispiele beschränkt.

In weiteren Ausführungsbeispielen sind gemeinsame Lichtwellenleiterkabel für die Sendeseite und die Empfangsseite der Sende- und Empfangskombinationen vorgesehen.

Fig. 5 zeigt ein Ausführungsbeispiel für eine solche Verwendung eines gemeinsamen Lichtwellenleiterkabels 27 in beiden Signalübertragungsrichtungen, wobei das gemeinsame Lichtwellenleiterkabel 27 sowohl eine Strahlenquelle 13 mit einer Sendeoptik 11 verbindet, als auch eine Empfangsoptik 12 auf einen Detektor 14 schaltet. Um eine Blendung der Empfängerseite für die Dauer des Sendeimpulses mit der Folge einer zeitweiligen Messunfähigkeit der Messeinrichtung zu vermeiden, ist auf der Seite des den elektronischen Elementen (Strahlenquelle 13, Detektor 14) zugewandten Endes des gemeinsamen Lichtwellenleiterkabels 27 ein optischer Richtkoppler 28 angeordnet. Im Ausführungsbeispiel gemäß Fig. 5 ist auch an dem den optischen Elementen zugewandt liegenden Ende des gemeinsamen Lichtwellenleiterkabels 27 ein Richtkoppler 29 angeordnet, so dass eine Vollduplex-Übertragung durch den gemeinsamen Lichtwellenleiter gegeben ist. Eine Blendung des Empfängers durch den Sender ist dadurch ausgeschlossen, da Strahlen in gleicher Wellenlänge in beiden Richtungen den Lichtwellenleiter passieren.

Fig. 6 zeigt ein weiteres Ausführungsbeispiel eines gemeinsamen Lichtwellenleiterkabels 28 zum Anschluss sowohl der Empfangsseite, als auch der Sendeseite der Sende- und Empfangskombination. Der Richtkoppler 28 ist dabei den elektronischen Elementen (Strahlenquelle 13/ Detektor 14) zugeordnet.

In einem weiteren, nicht gezeigten Ausführungsbeispiel sind die elektronischen Elemente (Laser/ Detektor) zu einer Sende- und Empfangskombination über gemeinsame Lichtwellenleiterkabel mit den optischen Elementen verbunden, dessen Länge derart mit dem Sendepuls des Lasers abgestimmt ist, dass die Lichtlaufzeit im gemeinsamen Lichtwellenleiterkabel 27 größer ist als die Pulsbreite des Sendepulses. Bei einer derartigen Länge des gemeinsamen Lichtwellenleiterkabels ist eine Blendung der Empfängerseite durch den Sender bereits abgeklungen, bevor die ersten Reflektionen von Zielobjekten außerhalb des Scansensors beim Detektor 14 eintreffen und erfasst werden.

## Patentansprüche

1. Optische Messvorrichtung für ein Kraftfahrzeug (1), mit wenigstens einem Laserscanner, der wenigstens eine Sende- und Empfangskombination mit einer Sendeoptik (11) für auszusendende elektromagnetische Strahlen und einer Empfangsoptik (12) zum Empfangen von an einem Zielobjekt in der Umgebung des Laserscanners reflektierten Strahlen, und mit elektronischen Elementen, nämlich einer der Sendeoptik (11) zugeordneten Strahlenquelle (13) zum Aussenden elektromagnetischer Strahlen und einem der Empfangsoptik (12) zugeordneten optoelektronischen Detektor (14) zur Bereitstellung eines elektrischen Empfangssignals (15) in Abhängigkeit der empfangenen Strahlen, umfasst, wobei die elektronischen Elemente an eine Steuer- und Auswertungseinheit (9) der Messvorrichtung (10, 10', 10") angeschlossen sind, wobei die optischen Elemente einer oder mehrerer Sende- und Empfangskombinationen in einem von den elektronischen Elementen baulich getrennten Scansensor (2, 3) angeordnet sind und mit den jeweils zugeordneten elektronischen Elementen über optische Leiter (8, 22, 23) verbunden sind, **dadurch gekennzeichnet, dass** die optische Messvorrichtung (10, 10', 10") mehrere Laserscanner umfasst und/oder mehrere Sende- und Empfangskombinationen pro Laserscanner angeordnet sind, wobei mehrere Sendeoptiken (11) über optische Leiter (22) an dieselben Strahlenquellen (13) und/oder mehrere Empfangsoptiken (12) über optische Leiter (23) an dieselben Detektoren (14) angeschlossen sind, wobei die optischen Leiter (22) mehrerer Sendeoptiken (11) und/oder die optischen Leiter (23) mehrerer Empfangsoptiken (12) wenigstens abschnittsweise durch ein gemeinsames Lichtwellenleiterkabel (25) gebildet sind und für jede Sende- und Empfangskombination ein optischer Schalter an dem gemeinsamen Lichtwellenleiterkabel (25, 26) angeordnet ist und dass die Länge des gemeinsamen Lichtwellenleiterkabels (27) von Sendeoptiken (11) und Empfangsoptiken (12) derart mit dem Sendepuls der zugeordneten Strahlenquelle abgestimmt ist, dass die Lichtlaufzeit im Lichtwellenleiterkabel größer ist, als die Pulsbreite des Sendepulses.

2. Messvorrichtung nach Anspruch 1,
**dadurch gekennzeichnet, dass**
die elektronischen Elemente einer oder mehrerer Sende- und
Empfangskombinationen mit der Steuer- und Auswertungseinheit (9) eine gemeinsame Baugruppe bilden.

3. Messvorrichtung nach einem der vorhergehenden Ansprüche,
**gekennzeichnet, durch** ein gemeinsames Lichtwellenleiterkabel (27) für den Anschluss sowohl der Sendeoptik (11) mit der zugeordneten Strahlenquelle, als auch der Empfangsoptik (12) mit dem jeweils zugeordneten Detektor (14) wenigstens einer Sende- und Empfangskombination.

4. Messvorrichtung nach einem der vorhergehenden Ansprüche,
**dadurch gekennzeichnet, dass**
dem gemeinsamen Lichtwellenleiterkabel von Sendeoptiken (11) und Empfangsoptiken (12) wenigstens ein optischer Richtkoppler (28, 29) zugeordnet ist.

5. Messvorrichtung nach einem der vorhergehenden Ansprüche, wobei der Scansensor eine Spiegeleinheit (18) mit einem um eine Rotationsachse (20) drehend antreibbaren Spiegelträger zur Umlenkung der ausgesendeten Strahlen auf die zu vermessende Szene und zur Umlenkung der empfangenen Strahlen zur Empfangsoptik (12) aufweist sowie eine Antriebseinheit (19) für die Spiegeleinheit (18) umfasst.

6. Messvorrichtung nach Anspruch 5 wobei der Scansensor zwei Paare von Sendeoptiken (11) und Empfangsoptiken (12) aufweist, welche jeweils derselben Spiegeleinheit (18) zugeordnet sind.

## Claims

1. Optical measuring device for a motor vehicle (1), having at least one laser scanner which comprises at least one transmitting and receiving combination having a transmitting optical system (11) for electromagnetic beams to be emitted and a receiving optical system (12) for receiving beams reflected at a target object in the environment of the laser scanner, and having electronic elements, namely a radiation source (13) which is assigned to the transmitting optical system (11) and is intended to emit electromagnetic beams and an optoelectronic detector (14) which is assigned to the receiving optical system (12) and is intended to provide an electrical reception signal (15) on the basis of the received beams, the electronic elements being connected to a control and evaluation unit (9) of the measuring device (10, 10', 10''), the optical elements of one or more transmitting and receiving combinations being arranged in a scan sensor (2, 3) structurally separate from the electronic elements and being connected to the respectively assigned electronic elements via optical conductors (8, 22, 23), **characterized in that** the optical measuring device (10, 10', 10") comprises a plurality of laser scanners and/or a plurality of transmitting and receiving combinations are arranged for each laser scanner, a plurality of transmitting optical systems (11) being connected to the same radiation sources (13) via optical conductors (22) and/or a plurality of receiving optical systems (12) being connected to the same detectors (14) via optical conductors (23), the optical conductors (22) of a plurality of transmitting optical systems (11) and/or the optical conductors (23) of a plurality of receiving optical systems (12) being formed, at least in sections, by a common optical waveguide cable (25), and an optical switch being arranged on the common optical waveguide cable (25, 26) for each transmitting and receiving combination, and **in that** the length of the common optical waveguide cable (27) of transmitting optical systems (11) and receiving optical systems (12) is matched to the transmission pulse of the assigned radiation source in such a manner that the light propagation time in the optical waveguide cable is greater than the pulse width of the transmission pulse.

2. Measuring device according to Claim 1,
**characterized in that**
the electronic elements of one or more transmitting and receiving combinations form a common assembly with the control and evaluation unit (9).

3. Measuring device according to one of the preceding claims,
**characterized by** a common optical waveguide cable (27) for connecting both the transmitting optical system (11) to the assigned radiation source and the receiving optical system (12) to the respectively assigned detector (14) of at least one transmitting and receiving combination.

4. Measuring device according to one of the preceding claims,
**characterized in that**
at least one optical directional coupler (28, 29) is assigned to the common optical waveguide cable of transmitting optical systems (11) and receiving optical systems (12).

5. Measuring device according to one of the preceding claims, the scan sensor having a mirror unit (18) with a mirror carrier, which can be rotationally driven about an axis of rotation (20) and is intended to deflect the emitted beams to the scene to be measured and to deflect the received beams to the receiving optical system (12), and comprising a drive unit (19) for the mirror unit (18).

6. Measuring device according to Claim 5,
the scan sensor having two pairs of transmitting optical systems (11) and receiving optical systems (12) which are each assigned to the same mirror unit (18).

## Revendications

1. Dispositif de mesure optique destiné à un véhicule automobile (1), comportant au moins un dispositif de balayage à laser qui comprend au moins une combinaison d'émission et de réception comportant une optique d'émission (11) destinée à des faisceaux électromagnétiques à émettre et une optique de réception (12) destinée à recevoir des faisceaux réfléchis sur un objet cible dans l'environnement du dispositif de balayage à laser et comportant des éléments électroniques, à savoir une source de rayonnement (13) associée à l'optique d'émission (11), destinée à émettre des faisceaux électromagnétiques et un détecteur optoélectronique (14) associé à l'optique de réception (12), destiné à fournir un signal de réception électrique (15) en fonction des faisceaux reçus, dans lequel les éléments électroniques sont raccordés à une unité de commande et d'analyse (9) du dispositif de mesure (10, 10', 10"), dans lequel les éléments optiques d'une ou de plusieurs combinaisons d'émission et de réception sont disposés dans un capteur à balayage (2, 3) structurellement séparé des éléments électroniques et sont respectivement reliés aux éléments électroniques associés par l'intermédiaire de conducteurs optiques (8, 22, 23), **caractérisé en ce que** le dispositif de mesure optique (10, 10', 10") comprend plusieurs dispositifs de balayage optiques et/ou plusieurs combinaisons d'émission et de réception par dispositif de balayage à laser, dans lequel plusieurs optiques d'émission (11) sont raccordées par l'intermédiaire de conducteurs optiques (22) aux mêmes sources de rayonnement (13) et/ou plusieurs optiques de réception (12) sont raccordées par l'intermédiaire de conducteurs (23) aux mêmes détecteur (14), dans lequel les conducteurs optiques (22) de plusieurs optiques de réception (11) et/ou les conducteurs optiques (23) de plusieurs optiques de réception (12) sont formés par sections d'un câble de guide d'ondes optique commun (25) et dans lequel, pour chaque combinaison d'émission et de réception, il est prévu un commutateur optique sur le câble de guide d'ondes optique commun (25, 26) et **en ce que** les longueurs des câbles de guides d'ondes optiques commun (27) d'optiques d'émission (11) et d'optiques de réception (12) sont adaptées à l'impulsion d'émission de la source de rayonnement associée de manière à ce que le temps de propagation soit plus élevé dans le câble de guide d'ondes optique que la largeur d'impulsion de l'impulsion d'émission.

2. Dispositif de mesure selon la revendication 1,
**caractérisé en ce que** les éléments électroniques d'une ou de plusieurs combinaisons d'émission et de réception forment un module commun avec l'unité de commande et d'évaluation (9).

3. Dispositif de mesure selon l'une quelconque des revendications précédentes,
**caractérisé par** un câble de guide d'ondes commun (27) à la fois destiné au raccordement de l'optique d'émission (11) à la source de rayonnement associée et de l'optique de réception (12) au détecteur (14) associé respectif d'au moins une combinaison d'émission et de réception.

4. Dispositif de mesure selon l'une quelconque des revendications précédentes,
**caractérisé en ce qu'**au moins un coupleur optique directif (28, 29) est associé au câble de guide d'ondes optique d'optiques d'émission (11) et d'optiques de réception (12).

5. Dispositif de mesure selon l'une quelconque des revendications précédentes, dans lequel le capteur à balayage comporte une unité à miroir (18) munie d'un porte-miroir pouvant être entraîné en rotation autour d'un axe de rotation (20) pour dévier les faisceaux émis vers la scène à mesurer et pour dévier les faisceaux reçus vers l'optique de réception (12) et comprend également une unité d'entraînement (19) destinée à l'unité à miroir (18).

6. Dispositif de mesure selon la revendication 5, dans lequel le capteur à balayage comporte deux paires d'optiques d'émission (11) et d'optiques de réception (12) qui sont respectivement associées à la même unité à miroir (18).
